# EUROPÄISCHE PATENTSCHRIFT

(11) **EP 1 903 246 B1**
(45) Veröffentlichungstag und Bekanntmachung des Hinweises auf die Patenterteilung: **23.09.2009**
(21) Anmeldenummer: 07015675.7
(22) Anmeldetag: 09.08.2007
(51) Int. Cl.: F16D 65/08

(54) **Exzentrischer Spannstift und Bremsbacke für exzentrischen Spannstift sowie System aus Spannstift und Bremsbacke**
Excentric spring pin and brake shoe for excentric spring pin and system consisting of clamping pin and brake shoe
Goupille excentrée et mâchoire de frein pour goupille excentrée et système composé d'une goupille et d'une mâchoire de frein

(30) Priorität: 20.09.2006 DE 102006044280
(43) Veröffentlichungstag der Anmeldung: 26.03.2008
(73) Patentinhaber: Hermann Peters GmbH & Co., 58256 Ennepetal (DE)
(72) Erfinder: Mois, Peter, 58256 Ennepetal (DE)
(74) Vertreter: Schweiger, Johannes

(56) Entgegenhaltungen:
- DE-A1- 3 704 912
- US-A- 5 261 510

## Beschreibung

Die Erfindung betrifft einen Spannstift zur Festlegung und Verspannung einer zwischen zwei Bremsbacken für Trommelbremsen angeordneten Zugfeder sowie eine mit dem Spannstift zusammenwirkende Bremsbacke und ein Trommelbremsensystem aus dem Spannstift und der mit dem Spannstift zusammenwirkenden Bremsbacke.

Trommelbremsen weisen üblicherweise mindestens eine zwischen zwei Bremsbacken verspannte Zugfeder auf, die für die Rückstellung der Bremsbacken nach einem Bremsvorgang in ihre ursprüngliche Position Sorge trägt. Solche Trommelbremsen sind beispielsweise in der DE 28 18 682 A1, DE 31 43 175 A1 sowie DE 39 45 785 A1 beschrieben. Eine Spanneinrichtung ist in der DE 37 04 912 A1 beschrieben.

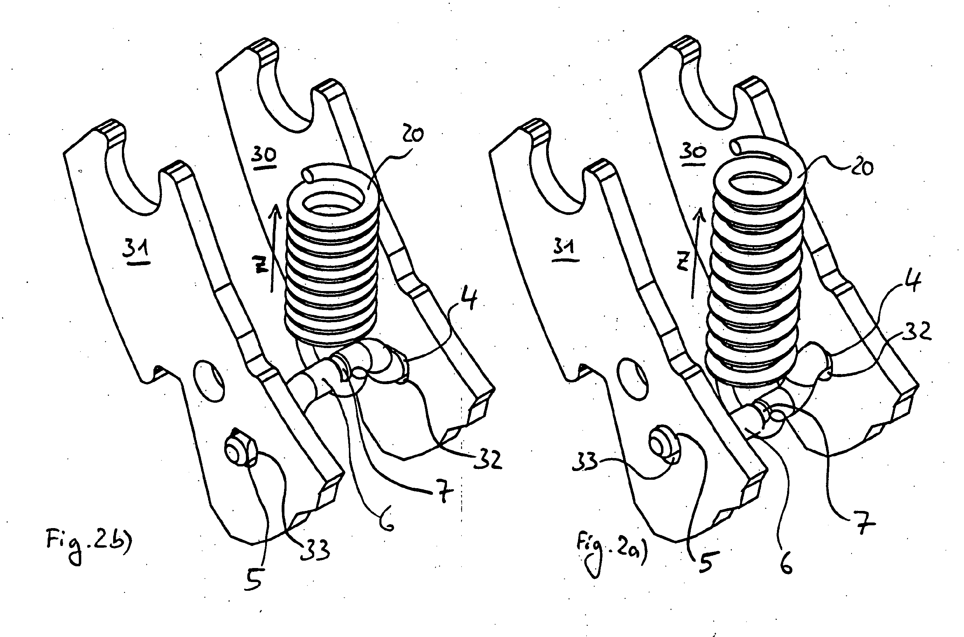

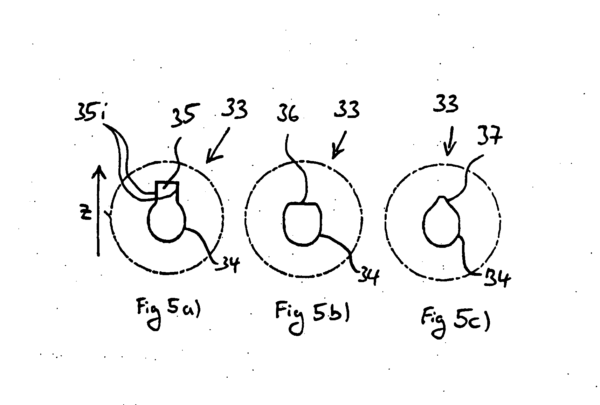

US 5,261,510 A offenbart einen Spannstif ein gemäß dem Oberbegriff des Anspruchs 1 wobei Haltestift mit einem an dem Stift angeformten Hebedaumen, mit welchem die Zugfeder von der dort in Figur 2 gezeigten Ausgangsstellung durch Rotation des Stifts in eine in Figur 5 gezeigte Endstellung eingehakt werden kann. Der Stift mit seinen Hebedaumen dient dabei als Hilfsmittel zum Aufspannen der Feder.

Die zwischen den Bremsbacken verspannte Zugfeder verursacht bei der Montage der schweren Bremsbacken auf den Achskörper Probleme, da beim Positionieren der Bremsbacken auf dem Achskörper durch die vorher mit den Bremsbacken zu verbindende Zugfeder die beiden Bremsbacken zusammengezogen werden.

Da es sich bei der Zugfeder meist um eine speziell ausgelegte Hochleistungsfeder mit großer Zugkraft handelt, um eine schnelle Rückstellung der Bremsbacken nach einem Bremsvorgang in die Ausgangslage der Bremse zu gewährleisten, hat ein einzelner Monteur große Schwierigkeiten, die Bremse zu montieren oder gar auszutauschen. Ein Austauschen der gesamten Verschleißteile einer Trommelbremse findet regelmäßig alle 1-2 Jahre statt, je nach Gebrauchsintensität.

Es ist daher die Aufgabe der vorliegenden Erfindung, die Montage von Bremsbacken für Trommelbremsen zu erleichtern.

Grundidee der vorliegenden Erfindung ist es dabei, zwischen Zugfeder und Bremsbacke zumindest an einer der beiden Bremsbacken einer Trommelbremse ein Stellglied anzuordnen, mit welchem nach Einbau der Bremsbacken auf den Achskörper die Zugfeder dauerhaft unter Spannung gesetzt werden kann. Durch das zusätzliche Stellglied, vorzugsweise ein Spannstift, ist zwar bei der Montage/Demontage ein zusätzlicher Arbeitsschritt, nämlich das Spannen oder Lösen des Stellglieds erforderlich. Durch diese Maßnahme wird aber der schwierigste Arbeitsschritt, nämlich das Aufziehen der Bremsbacken, erheblich erleichtert, da die zwischen den Bremsbacken angeordnete Zugfeder entweder nachträglich eingehängt werden kann oder zumindest beim Aufziehen nicht unter Vorspannung steht.

Durch den verringerten Kraftaufwand beim Montieren/Demontieren der Bremse, beispielsweise bei einem Bremsbelagwechsel, kann die Montage/Demontage durch eine Person erfolgen. Andererseits sinkt durch die geänderte Montagereihenfolge und die damit im Zusammenhang stehende Erleichterung der Montage die Verletzungsgefahr und gleichzeitig auch die Wahrscheinlichkeit einer Beschädigung der beweglichen Teile wie Bremsrolle, Bremsnocken oder Lagerbolzen.

Erfindungsgemäß ist daher ein Spannstift zur Festlegung und Verspannung einer zwischen zwei Bremsbacken für Trommelbremsen angeordneten Zugfeder vorgesehen, wobei der Spannstift folgende Merkmale aufweist:
- einen, vorzugsweise an einem Stellende des Spannstiftes angeordneten, Stellbereich,
- mindestens einen Rastabschnitt zur Verrastung des Spannstifts mit der Bremsbacke in einer Spannposition der Zugfeder,
- mindestens einen Exzenterabschnitt, in welchem Mittel zur Festlegung der Zugfeder, vorzugsweise eine Umfangsnut, zumindest in einer Zugrichtung der Zugfeder vorgesehen sind.

Erfindungsgemäß ist weiterhin eine Bremsbacke für eine Trommelbremse mit
- einem Bremsbelagträger zur Aufnahme eines Bremsbelags auf einer Außenseite des Bremsbelagträgers und
- zwei von der Innenseite des Bremsbelagträgers abstehenden Stegen vorgesehen,
wobei mindestens einer der Stege, vorzugsweise jeder der beiden Stege, ein, zumindest teilweise, zu einem Rastabschnitt eines Spannstiftes gemäß einem der vorhergehenden Ansprüche formkomplementäres Rastmittel aufweist.

Erfindungsgemäß ist auch eine Trommelbremse mit zwei relativ zum Achskörper des Fahrzeuganhängers, insbesondere über einen S-förmigen Bremsnocken, gegenläufig drehbare Bremsbacken vorgesehen, wobei im Betriebszustand der Trommelbremse zwischen den Bremsbacken eine Zugfeder verspannt ist, und wobei die Zugfeder durch einen Spannstift aus einer Spannposition in eine Montageposition und umgekehrt überführbar ist.

Mit Vorteil ist der Spannstift durch einen kreisförmigen Querschnitt gekennzeichnet, da hierbei das Verhältnis zwischen Herstellungsaufwand und Stabilität des Spannstiftes optimal ist.

Weiterhin ist mit Vorteil vorgesehen, dass der Exzenterabschnitt des Spannstiftes wannenförmig ausgebildet ist.

In einer besonderen Ausführungsform des Spannstiftes ist vorgesehen, dass der Exzenterabschnitt von dem Stellende und einem dem Stellende gegenüberliegenden Ende des Spannstiftes etwa gleich beabstandet ist. Hierdurch ist gewährleistet, dass die Zugfeder etwa mittig zwischen den Bremsbackenstegen angeordnet ist.

In einer weiteren Ausgestaltung der Erfindung ist mit Vorteil vorgesehen, dass mindestens einer der Rastabschnitte zwei gegenüberliegende, in der Spannposition parallel zur Zugrichtung Z, Z' der Zugfeder ausgebildete Abflachungen zur Verrastung mit einem quaderförmigen Ausschnittsteilbereich aufweist. Sobald der Spannstift beispielsweise durch Drehung um 180° um die eigene Achse mit seinem Exzenterabschnitt die Zugfeder unter Spannung setzt, gleitet der Spannstift, unterstützt durch die Zugkraft der Zugfeder durch die geometrisch zu einem quaderförmigen Ausschnittsteilbereich der Bremsbacke kongruenten Abflachungen in den quaderförmigen Ausschnittsteilbereich und ist damit formschlüssig und drehfest in dem quaderförmigen Ausschnittsteilbereich festgelegt. Nur durch Kraftaufwendung unter Überwindung der Zugkraft der Zugfeder ist es möglich, den Spannstift von der Spannposition in eine Montageposition zurückzudrehen da in der Spannposition eine Drehbewegung des Spannstiftes durch die seitlichen Abflachungen verhindert wird.

Alternativ dazu ist in einer weiteren Ausführungsform der Erfindung vorgesehen, dass mindestens einer der Rastabschnitte eine in der Spannposition in Zugrichtung Z, Z' der Zugfeder gerichtete Abflachung zur Verrastung mit einer Phase aufweist. Das Wirkprinzip ist ähnlich der eben beschriebenen Ausführungsform mit seitlichen Abflachungen.

In einer weiteren alternativen Ausgestaltung der Erfindung ist vorgesehen, dass mindestens einer der Rastabschnitte zwei in der Spannposition, vorzugsweise gleichwinklig zur Zugrichtung Z, Z' aneinander anschließende, voneinander weg weisende Abflachungen zur Verrastung mit einem eingesenkten Ausschnittsteilbereich aufweist. Anders ausgedrückt ist einer der Rastabschnitte in Zugrichtung Z V-förmig angeschrägt und damit in einen V-förmig eingesenkten Ausschnittsteilbereich der Bremsbacken einrastbar.

Dadurch, dass der Stellbereich Stellmittel umfasst, kann die erforderliche Stellkraft leichter auf den Spannstift übertragen werden. Hierbei ist das Stellmittel vorzugsweise als Sechskantmutter mit dem Spannstift verschweißt, wodurch mit einem einfachen Schraubenschlüssel eine Umschaltung des Spannstiftes zwischen Spannposition und Montageposition beziehungsweise Demontageposition erfolgen kann.

Die erfindungsgemäße Bremsbacke ist so ausgestaltet, um mit den vorbeschriebenen Ausführungsformen des Spannstiftes zusammenzuwirken, wobei innerhalb der verschiedenen Ausführungsformen beispielsweise an gegenüberliegenden Bremsbackenstegen verschiedene Ausgestaltungen vorgesehen sein können. Auch eine einseitige Verrastung an einem Bremsbackensteg ist denkbar. Weiterhin kann auch nur eine von zwei gegenüberliegenden Bremsbacken mit einem Spannstift versehen sein, wobei die andere Bremsbacke auf herkömmliche Art und Weise mit einer Spannfeder versehen wird.

Durch gegenüberliegende Positionierung der Rastmittel, vorzugsweise in einer Flucht, wird die Montage des Spannstiftes und der Zugfeder erheblich erleichtert.

Indem die Rastmittel als Löcher, vorzugsweise zumindest eines der Rastmittel als Durchgangsloch, ausgebildet sind, kann der Spannstift nach Montage der Bremsbacke von der durch den Monteur zugänglichen Seite in die Bremsbacke eingeschoben werden.

Analog der oben beschriebenen Ausführungsform des Spannstiftes mit zwei parallelen, seitlichen Abflachungen sind bei der Bremsbacke die Durchgangslöcher aus einem zylinderförmigen Ausschnittsteilbereich und einem in Zugrichtung der Zugfeder gerichteten quaderförmigen Ausschnittsteilbereich gebildet. Durch den zylinderförmigen Ausschnittsteilbereich ist der Spannstift durchführbar, während der Spannstift nach Rotation des Spannstiftes um vorzugsweise 180° in den quaderförmigen Ausschnittsteilbereich einrastbar ist.

Analog zu dem Spannstift mit einer in Zugrichtung Z, Z' der Zugfeder gerichteten Abflachung sind die Durchgangslöcher der entsprechenden Bremsbacke aus einem zylinderförmigen Ausschnittsteilbereich und einer in Zugrichtung Z, Z' der Zugfeder gerichteten Fase gebildet.

Bei der oben beschriebenen V-förmigen Ausgestaltung sind die Durchgangslöcher der entsprechenden Bremsbacke aus einem zylinderförmigen Ausschnittsteilbereich und einem in Zugrichtung Z, Z' der Zugfeder eingesenkten Ausschnittsteilbereich gebildet, wobei der eingesenkte Ausschnittsteilbereich vorzugsweise ebenfalls V-förmig ausgestaltet ist.

Die erfindungsgemäße Trommelbremse mit mindestens einem vorbeschriebenem Bremsbacken und mindestens einem vorbeschriebenen Spannstift kann auf beiden Seiten der Zugfeder erfindungsgemäß mit einem Spannstift und erfindungsgemäßen Bremsbacken ausgestattet sein. Es ist aber auch denkbar, dass nur eine Seite der Trommelbremse mit erfindungsgemäßen Spannstiften und Bremsbacken ausgestattet ist.

In einer bevorzugten Ausführungsform der Erfindung ist die Spannposition durch Rastmittel der Bremsbacken und korrespondierende Rastmittel der Spannstifte sicherbar. Die Sicherung der Spannposition kann beispielsweise durch einen zusätzlichen Splint erfolgen, der eine Drehbewegung des Spannstiftes verhindert.

Weitere Vorteile und zweckmäßige Ausführungen der Erfindung sind in den weiteren Ansprüchen, den Figuren, der Beschreibung und den Zeichnungen wiedergegeben.

Es zeigen:
- Fig. 1a:: eine Teilansicht einer erfindungsgemäßen Trommelbremse mit zwei gegenüberliegenden, erfindungsgemäßen Bremsbacken und zwei erfindungsgemäßen Spannstiften in Spannposition,
- Fig. 1b:: eine Teilansicht einer erfindungsgemäßen Trommelbremse mit zwei gegenüberliegenden, erfindungsgemäßen Bremsbacken und zwei erfindungsgemäßen Spannstiften in Montageposition,
- Fig. 2a:: eine perspektivische Teilansicht der erfindungsgemäßen Trommelbremse mit einer erfindungsgemäßen Bremsbacke und einem erfindungsgemäßen Spannstift in Spannposition,
- Fig. 2b:: eine perspektivische Teilansicht der erfindungsgemäßen Trommelbremse mit einer erfindungsgemäßen Bremsbacke und einem erfindungsgemäßen Spannstift in Montageposition,
- Fig. 3a:: eine Seitenansicht der erfindungsgemäßen Trommelbremse mit einer erfindungsgemäßen Bremsbacke und einem erfindungsgemäßen Spannstift in Spannposition,
- Fig. 3b:: eine Seitenansicht der erfindungsgemäßen Trommelbremse mit einer erfindungsgemäßen Bremsbacke und einem erfindungsgemäßen Spannstift in Montageposition,
- Fig. 4a:: eine perspektivische Ansicht einer Ausführungsform des erfindungsgemäßen Spannstiftes,
- Fig. 4b:: eine perspektivische Ansicht einer Ausführungsform des erfindungsgemäßen Spannstiftes,
- Fig. 4c:: eine perspektivische Ansicht einer Ausführungsform des erfindungsgemäßen Spannstiftes,
- Fig. 5a:: eine Seitenansicht eines Rastmittels der Bremsbacke für einen Spannstift gemäß Figur 4a,
- Figur 5b:: eine Seitenansicht eines Rastmittels der Bremsbacke für einen Spannstift gemäß Figur 4b und
- Figur 5c:: eine Seitenansicht eines Rastmittels der Bremsbacke für einen Spannstift gemäß Figur 4c.

In den Figuren sind gleiche Bauteile und Bauteile mit gleicher Funktion mit den gleichen Bezugszeichen gekennzeichnet.

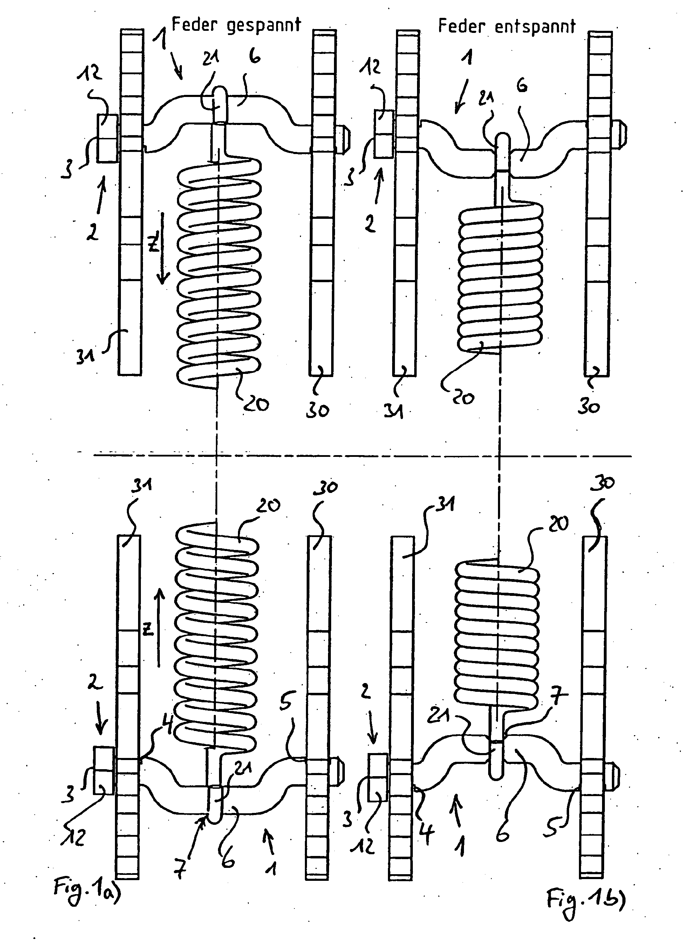

In Figuren 1a, 1b, 2a, 2b, 3a und 3b sind jeweils Bremsbackenstege 30, 31 einer ansonsten nicht dargstellten Bremsbacke dargestellt, wobei die Bremsbackenstege an der Innenseite eines halbzylinderförmigen Bremsbelagträgers angeschweißt sind und von diesem parallel zueinander abstehen. Auf der gegenüberliegenden Seite des Bremsbelagträgers ist der hier nicht dargstellte Bremsbelag angebracht.

In Figuren 1a und 1b sind je zwei gegenüberliegende Bremsbacken teilweise dargestellt. Die beiden gegenüberliegenden Bremsbacken sind über je einen in die Bremsbackenstege eingreifenden Spannstift 1 und eine an den beiden Spannstiften 1 angreifende Zugfeder 20 miteinander verspannt. Die Zugfeder 20 zieht die oben liegende Bremsbacke in Zugrichtung Z' nach unten in Richtung der anderen Bremsbacke, wohingegen die unten liegende Bremsbacke durch die Zugfeder 20 in entgegen gesetzte Zugrichtung Z nach oben in Richtung der oben liegenden Bremsbacke gezogen wird.

Der Spannstift 1 durchstößt je ein Durchgangsloch 32, 33 der Bremsbackenstege 30, 31, wobei die Durchgangslöcher 32, 33 einander gegenüberliegend angeordnet sind.

In Figur 1 a ist die Zugfeder 20 gespannt und der jeweilige Spannstift 1 in einer Spannposition, in der ein Exzenterabschnitt 6 in seiner maximalen Erstreckung entgegen der Zugrichtung Z, Z' positioniert ist. In Figur 1b sind die Spannstifte 1 in einer um 180° gegenüber der Spannposition gemäß Figur 1a rotierten Montageposition, in welcher der Exzenterabschnitt 6 jedes der beiden Spannstifte 1 in seiner maximalen Erstreckung in Zugrichtung Z, Z' verharrt. In dieser Position ist die Zugfeder 20 entspannt oder zumindest weniger gespannt als in der Spannposition gemäß Figur 1a. Die Zugfeder 20 weist an beiden Enden je einen entgegen der Zugrichtung Z, Z' weisenden, U-förmigen Haken 21 auf, dessen einer Schenkel in Zugrichtung Z, Z' endet.

Der Haken 21 wird in eine im Exzenterabschnitt 6 vorzugsweise mittig angeordnete Umfangsnut 7 eingehängt, wodurch die Zugfeder 20 gegen ein axiales Verrutschen der Zugfeder 20 auf den Spannstift 1 gesichert wird.

Mit einer außerhalb des Bremsbackensteges 31 an einem Stellende 3 des Spannstiftes 1 in einem Stellbereich 2 angebrachten Sechskantmutter 12 kann der Spannstift 1 in rotatorische Bewegung versetzt werden, wobei durch die exzentrische Form des Spannstiftes 1 die rotatorische Bewegung in eine translatorische Bewegung umgewandelt wird, die sich auf die Zugfeder 20 überträgt.

In Figuren 2a und 2b sind die beiden unteren Bremsbacken aus Figuren 1a und 1b in perspektivischer Ansicht dargestellt, in welcher die Durchgangslöcher 32 und 33 in den beiden Bremsbackenstegen 30 und 31 erkennbar sind. Die Rastabschnitte 4, 5 des Spannstiftes 1 sind auf dem Spannstift 1 so angeordnet, dass die beiden Rastabschnitte 4, 5 gleichzeitig in die Durchgangslöcher 32, 33 der beiden Bremsbackenstege 30, 31 einrasten. Die axiale Erstreckung der Rastabschnitte 4, 5 entspricht in etwa der Dicke der Bremsbackenstege 30, 31 beziehungsweise der axialen Erstreckung der Durchgangslöcher 32, 33, wobei die Rastabschnitte 4, 5 die Durchgangslöcher 32, 33 mit Spiel überragend ausgebildet sind.

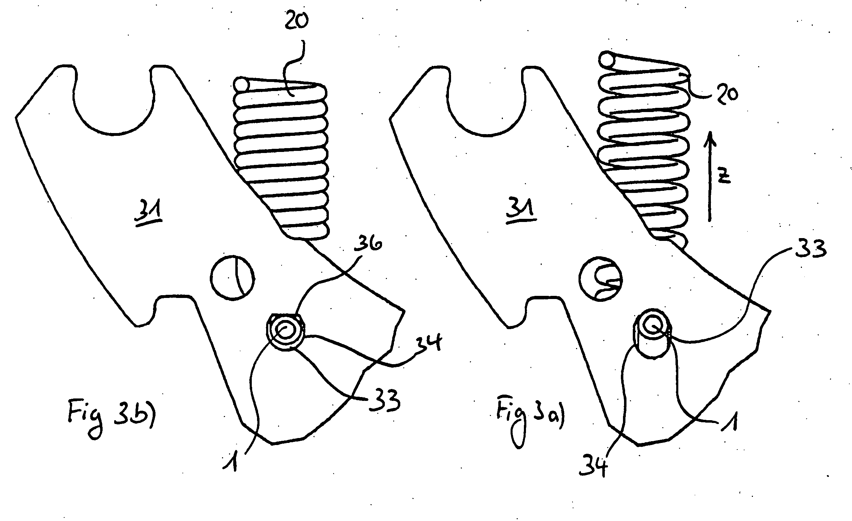

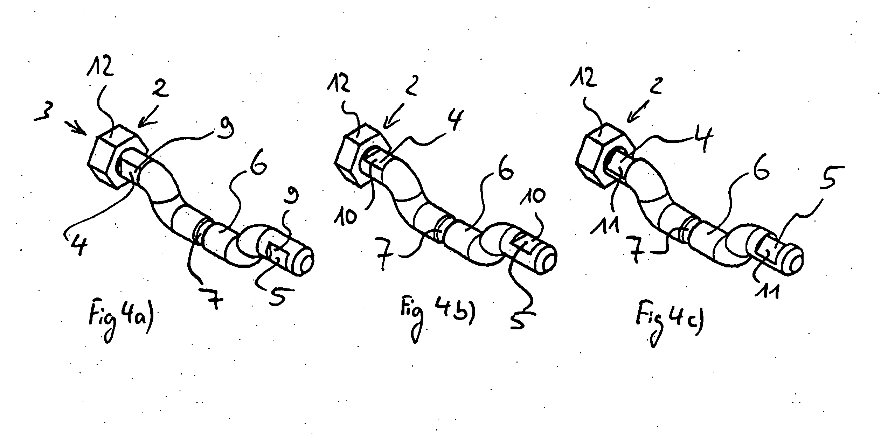

Um die Spannposition und Montageposition des Spannstiftes 1 zu verdeutlichen, ist der Bremsbackensteg 31 mit dem Spannstift 1 und der Zugfeder 20 in Figur 3a in der Spannposition und in Figur 3b in der Montageposition dargestellt. Das Ausführungsbeispiel entspricht den in Figuren 4b und 5b dargestellten Spannstiften 1 und Durchgangslöchern 32, 33. In der in Figur 3b dargestellten Position mit entlasteter Zugfeder 20 ist der Spannstift 1 wie in Figuren 1b und 2b dargestellt mit seinem Exzenterabschnitt 6 in Richtung Zugrichtung Z gerichtet. Hierbei stößt der Spannstift 1 mit seinem Rastabschnitt 5 an die Abflachung 36, wobei an der Abflachung 36 abgewandten Seite die Abflachung 10 des Spannstiftes 1 positioniert ist. In dieser Position kann die Zugfeder 20 von dem Spannstift 1 abgehängt werden und der Spannstift durch einen zylinderförmigen Ausschnittsteilbereich 34 der Durchgangslöcher 32, 33 herausgeführt werden.

In der um 180° durch die gegenüberliegende Sechskantmutter 12 verdrehten Position des Spannstiftes 1 liegt die in Figur 4b gezeigte Abflachung 10 des Spannstiftes 1 an der Abflachung 36 des Durchgangsloches 33 an, wodurch mithilfe der Zugkraft der Zugfeder 20 eine Verrastung des Spannstiftes 1 mit dem Durchgangsloch 33 erfolgt.

In Figuren 4a, 4b und 4c ist der Spannstift 1 mit seinem Stellbereich 2, dem daran anschließenden Rastabschnitt 4, dem mittig angeordneten, wannenförmigen Exzenterabschnitt 6 und dem hieran anschließenden Rastabschnitt 5 dargestellt.

Die Ausgestaltung der Rastabschnitte 4, 5 ist in Figur 4a durch zwei seitliche Abflachungen 9 gebildet, die parallel zueinander und parallel zur Zugrichtung Z, Z' sowie parallel zu der Erstreckungsrichtung des Exzenterabschnittes 6 angeordnet sind. Den Rastabschnitten 4, 5 mit Abflachungen 9 entspricht das in Figur 5a gezeigte Durchgangsloch 33 mit einem quaderförmigen Ausschnittsteilbereich 35 an dessen gegenüberliegenden seitlichen Innenflächen 35i die Abflachungen 9 in der Spannposition zur Anlage kommen und damit verrasten.

Die in Figur 4b gezeigten Abflachungen 10 der Rastabschnitte 4, 5 sind so ausgestaltet, dass sie quer zur Zugrichtung Z, Z' beziehungsweise quer zur Ersteckungsrichtung des Exzenterabschnittes 6 in der Spannposition/Montageposition verlaufen. Die Abflachungen 10 verrasten in der Spannposition mit der in Figur 5b gezeigten Fase 36 des Durchgangsloches 33.

In Figur 4c sind je zwei gegenüberliegende Abflachungen 11 in den Rastabschnitten 4, 5 vorgesehen, die sich V-förmig aneinander anschließend in der Spannposition in Zugrichtung Z, Z' weisend beziehungsweise von der Erstreckungsrichtung des Exzenterabschnitts 6 weg weisend aneinander anschließen. Die V-förmige Ausgestaltung, vorzugsweise mit flacher Spitze, rastet in der Spannposition in den in Figur 5c gezeigten eingesenkten Ausschnittsteilbereich 37 des Bremsbackensteges 31 ein.

Analog hierzu verrasten die in Figuren 4a, 4b und 4c gezeigten Rastabschnitte 5 in analog den in Figuren 5a, 5b und 5c gezeigten Durchgangslöcher 33 gebildeten Durchgangslöcher 32 des Bremsbackensteges 30 ein.

### Bezugszeichenliste

- 1: Spannstift
- 2: Stellbereich
- 3: Stellende
- 4: Rastabschnitt
- 5: Rastabschnitt
- 6: Exzenterabschnitt
- 7: Umfangsnut
- 8: Gegenüberliegendes Ende
- 9: Abflachung
- 10: Abflachung
- 11: Abflachung
- 12: Stellmittel
- 20: Zugfeder
- 30: Steg
- 31: Steg
- 32: Durchgangsloch
- 33: Durchgangsloch
- 34: Zylinderförmiger Ausschnittsteilbereich
- 35: Quaderförmiger Ausschnittsteilbereich
- 35i: Seitliche Innenflächen
- 36: Fase
- 37: Eingesenkter Ausschnittsteilbereich
- Z, Z': Zugrichtung der Zugfeder

## Patentansprüche

1. Spannstift (1) zur Festlegung und Verspannung einer zwischen zwei Bremsbacken für Trommelbremsen angeordneten Zugfeder (20), wobei der Spannstift (1) folgende Merkmale aufweist:
- einen vorzugsweise an einem Stellende (3) des Spannstiftes (1) angeordneten, Stellbereich (2),
**dadurch gekennzeichnet, dass** - mindestens einen Rastabschnitt (4, 5) zur Verrastung des
- Spannstifts (1) mit der Bremsbacke in einer Spannposition der Zugfeder (20) vorgesehen ist,
- mindestens einen Exzenterabschnitt (6), in welchem Mittel (7) zur Festlegung der Zugfeder vorzugsweise eine Umfangsnut (7), zumindest in einer Zugrichtung der Zugfeder (20) vorgesehen sind.

2. Spannstift (1) nach Anspruch 1,
**dadurch gekennzeichnet,**
**dass** der Spannstift (1) einen kreisförmigen Querschnitt aufweist.

3. Spannstift (1) nach Anspruch 1 oder 2,
**dadurch gekennzeichnet,**
**dass** der Exzenterabschnitt (6) wannenförmig ausgebildet ist.

4. Spannstift (1) nach einem der vorhergehenden Ansprüche,
**dadurch gekennzeichnet,**
**dass** der Exzenterabsclinitt (6) von dem Stellende (3) und einem dem Stellende (3) gegenüberliegenden Ende (8) des Spannstiftes (1) etwa gleich beabstandet ist.

5. Spannstift (1) nach einem der vorhergehenden Ansprüche,
**dadurch gekennzeichnet,**
**dass** mindestens einer der Rastabschnitte (4, 5) zwei gegenüberliegende, in der Spannposition parallel zur Zugrichtung Z der Zugfeder (20) ausgebildete Abflachungen (9) zur Verrastung mit einem quaderförmigen Ausschnittsteilbereich (35) aufweist.

6. Spannstift (1) nach einem der Ansprüche 1 bis 4,
**dadurch gekennzeichnet,**
**dass** mindestens einer der Rastabschnitte (4, 5) eine in der Spannposition in Zugrichtung Z der Zugfeder (20) gerichtete Abflachung (10) zur Verrastung mit einer Fase (36) aufweist.

7. Spannstift (1) nach einem der Ansprüche 1 bis 4,
**dadurch gekennzeichnet,**
**dass** mindestens einer der Rastabschnitte (4, 5) zwei in der Spannposition, vorzugsweise gleichwinkelig zur Zugrichtung Z, aneinander anschließende, voneinander weg weisende Abflachungen (11) zur Verrastung mit einem eingesenkten Ausschnittsteilbereich (37) aufweist.

8. Spannstift (1) nach einem der vorhergehenden Ansprüche,
**dadurch gekennzeichnet,**
**dass** der Stellbereich (2) Stellmittel (12) umfasst.

9. Spannstift (1) nach Anspruch 8,
**dadurch gekennzeichnet,**
**dass** das Stellmittel (12) eine, vorzugsweise mit dem Spannstift (1) verschweißte, Sechskantmutter (12) ist.

10. Spannstift (1) nach einem der vorhergehenden Ansprüche,
**dadurch gekennzeichnet,**
**dass** der Stellbereich (2) unmittelbar an einen der Rastabschnitte (4, 5) anschließt.

11. Bremsbacke für eine Trommelbremse mit
- einem Bremsbelagträger zur Aufnahme eines Bremsbelags auf einer Außenseite des Bremsbelagträgers und
- zwei von der Innenseite des Bremsbelagträgers abstehenden Stegen (30, 31),
**dadurch gekennzeichnet,**
**dass** mindestens einer der Stege (30, 31), vorzugsweise jeder der beiden Stege (30, 31), ein, zumindest teilweise, zu einem Rastabschnitt (4) eines Spannstiftes (1) gemäß einem der vorhergehenden Ansprüche formkomplementäres Rastmittel (32, 33) aufweist.

12. Bremsbacke nach Anspruch 11,
**dadurch gekennzeichnet,**
**dass** die Rastmittel (32, 33) gegenüberliegend positioniert sind.

13. Bremsbacke nach einem der Ansprüche 11 oder 12,
**dadurch gekennzeichnet,**
**dass** die Rastmittel (32, 33) als Löcher (32, 33), vorzugsweise zumindest eines der Rastmittel (32, 33) als Durchgangsloch (32, 33), ausgebildet sind.

14. Bremsbacke nach einem der Ansprüche 11 bis 13,
**dadurch gekennzeichnet,**
**dass** die Durchgangslöcher (32, 33) aus einem zylinderförmigen Ausschnittsteilbereich (34) und einem in Zugrichtung der Zugfeder (20) gerichteten quaderförmigen Ausschnittsteilbereich (35) gebildet sind.

15. Bremsbacke nach einem der Ansprüche 11 bis 13,
**dadurch gekennzeichnet,**
**dass** die Durchgangslöcher (32, 33) aus einem zylinderförmigen Ausschnittsteilbereich (34) und einer in Zugrichtung der Zugfeder (20) gerichteten Fase (36) gebildet sind.

16. Bremsbacke nach einem der Ansprüche 11 bis 13,
**dadurch gekennzeichnet,**
**dass** die Durchgangslöcher (32, 33) aus einem zylinderförmigen Ausschnittsteilbereich (34) und einem in Zugrichtung der Zugfeder (20) eingesenkten Ausschnittsteilbereich (37) gebildet sind.

17. Trommelbremse, insbesondere für Fahrzeuganhänger, mit zwei relativ zum Achskörper des Fahrzeuganhängers, insbesondere über einen S-förmigen Bremsnocken, gegenläufig drehbare Bremsbacken gemäß einem der Ansprüche 11 bis 16, wobei im Betriebszustand der Trommelbremse zwischen den Bremsbacken eine Zugfeder (20) verspannt ist, und wobei die Zugfeder durch einen Spannstift (1) nach einem der Ansprüche 1 bis 10 aus einer Spannposition in eine Montageposition und umgekehrt überführbar ist.

18. Trommelbremse nach Anspruch 17,
**dadurch gekennzeichnet,**
**dass** die Spannposition durch Rastmittel der Bremsbacken und korrespondierende Rastmittel der Spannstifte (1) sicherbar ist.

## Claims

1. A clamping pin (1) for fixing and clamping a tension spring (20) which is arranged between two brake shoes for drum brakes, wherein the clamping pin (1) has the following features:
- an adjustment region (2) which is preferably arranged at an adjustment end (3) of the clamping pin (1),
**characterised in that**
- at least one locking section (4, 5) is provided for locking the clamping pin (1) with the brake shoe in a clamping position of the tension spring (20),
- at least one eccentric section (6) is provided, in which means (7) for fixing the tension spring, preferably a circumferential groove (7), are provided at least in one pulling direction of the tension spring (20).

2. The clamping pin (1) according to Claim 1,
**characterised in that**
the clamping pin (1) has a circular cross section.

3. The clamping pin (1) according to Claim 1 or 2,
**characterised in that**
the eccentric section (6) has a well-shaped configuration.

4. The clamping pin (1) according to one of the preceding claims,
**characterised in that**
the eccentric section (6) is at an approximately equal distance from the adjustment end (3) and an end (8) of the clamping pin (1) which is opposite the adjustment end (3).

5. The clamping pin (1) according to one of the preceding claims,
**characterised in that**
at least one of the locking sections (4, 5) has two opposite flattened portions (9), which are formed parallel to the pulling direction Z of the tension spring (20) in the clamping position, for locking with a square-shaped cut-out subregion (35).

6. The clamping pin (1) according to one of Claims 1 to 4,
**characterised in that**
at least one of the locking sections (4, 5) has a flattened portion (10), which is aligned in the pulling direction Z of the tension spring (20) in the clamping position, for locking with a bevel (36).

7. The clamping pin (1) according to one of Claims 1 to 4,
**characterised in that**
at least one of the locking sections (4, 5) has two flattened portions (11), which point away from each other, are connected to each other and are preferably at the same angle to the pulling direction Z in the clamping position, for locking with a recessed cut-out subregion (37).

8. The clamping pin (1) according to one of the preceding claims,
**characterised in that**
the adjustment region (2) comprises adjustment means (12).

9. The clamping pin (1) according to Claim 8,
**characterised in that**
the adjustment region (12) is a hexagon nut (12) which is preferably welded to the clamping pin (1).

10. The clamping pin (1) according to one of the preceding claims,
**characterised in that**
the adjustment region (2) connects directly to one of the locking sections (4, 5).

11. A brake shoe for a drum brake, with
- a brake lining support for receiving a brake lining on an outer side of the brake lining support and
- two webs (30, 31) which project from the inner side of the brake lining support,
**characterised in that**
at least one of the webs (30, 31), preferably each of the two webs (30, 31) has a locking means (32, 33) which has an at least partially complementary shape to a locking section (4) of a clamping pin (1) according to one of the preceding claims.

12. The brake shoe according to Claim 11,
**characterised in that**
the locking means (32, 33) are positioned opposite.

13. The brake shoe according to one of Claims 11 or 12,
**characterised in that**
the locking means (32, 33) are configured as holes (32, 33), preferably at least one of the locking means (32, 33) is configured as a through-hole (32, 33).

14. The brake shoe according to one of Claims 11 to 13,
**characterised in that**
the through-holes (32, 33) are formed from a cylindrical cut-out subregion (34) and a square-shaped cut-out subregion (35) which is aligned in the pulling direction of the tension spring (20).

15. The brake shoe according to one of Claims 11 to 13,
**characterised in that**
the through-holes (32, 33) are formed from a cylindrical cut-out subregion (34) and a bevel (36) which is aligned in the pulling direction of the tension spring (20).

16. The brake shoe according to one of Claims 11 to 13,
**characterised in that**
the through-holes (32, 33) are formed from a cylindrical cut-out subregion (34) and a cut-out subregion (37) which is recessed in the pulling direction of the tension spring (20).

17. A drum brake, in particular for vehicle trailers, with two brake shoes according to one of Claims 11 to 16, which can be rotated in opposite directions relative to the axle body of the vehicle trailer, in particular by means of an S-shaped brake cam, wherein a tension spring (20) is clamped between the brake shoes when the drum brake is in its operating state, and wherein the tension spring can be transferred from a clamping position into a mounting position and vice versa by means of a clamping pin (1) according to one of Claims 1 to 10.

18. The drum brake according to Claim 17,
**characterised in that**
the clamping position can be secured by locking means of the brake shoe and corresponding locking means of the clamping pins (1).

## Revendications

1. Goupille de serrage (1) pour immobiliser et bloquer un ressort de traction (20) disposé entre deux mâchoires de serrage pour freins à tambour, dans laquelle la goupille de serrage (1) présente les caractéristiques suivantes :
- une zone de réglage (2) disposée de préférence à une extrémité de réglage (3) de la goupille de serrage (1),
**caractérisée en ce que**
- au moins une portion d'encliquetage (4,5) pour assembler par encliquetage la goupille de serrage (1) avec la mâchoire de fréquence en une position de tension du ressort de traction (20) est prévue,
- au moins une portion excentrée (6), dans laquelle des moyens (7) pour immobiliser et bloquer le ressort de traction, de préférence une rainure circonférentielle (7), au moins dans une direction de traction du ressort de traction (20) sont prévus.

2. Goupille de serrage (1) selon la revendication 1,
**caractérisée en ce que**
la goupille de serrage présente une section transversale circulaire.

3. Goupille de serrage (1) selon la revendication 1 ou 2,
**caractérisée en ce que**
le portion excentrée (6) est conçue en forme de cuvette.

4. Goupille de serrage (1) selon une des revendications précédentes,
**caractérisée en ce que**
la portion excentrée (6) a un espacement approximativement identique par rapport à l'extrémité de réglage (3) et à une extrémité (8) de la goupille de serrage (1) en vis-à-vis de l'extrémité de réglage (3).

5. Goupille de serrage (1) selon une des revendications précédentes,
**caractérisée en ce que**
au moins une des portions d'encliquetage (4,5) présente deux méplats (9) en vis-à-vis, configurés dans la position de tension parallèlement à la direction de traction Z du ressort de traction (20) en vue de l'assemblage par encliquetage avec une zone partielle de découpe (35) parallélépipédique.

6. Goupille de serrage (1) selon une des revendications 1 à 4,
**caractérisée en ce que**
au moins une des portions d'encliquetage (4,5) présente un méplat (10) orienté dans la position de tension dans la direction de traction Z du ressort de traction (20) à des fins d'assemblage par encliquetage avec un chanfrein (36).

7. Goupille de serrage (1) selon une des revendications 1 à 4,
**caractérisée en ce que**
au moins une des portions d'encliquetage (4,5) présente deux méplats (11) dans la position de tension, se raccordant l'un à l'autre de préférence à angle droit par rapport à la direction de traction Z, opposés l'un à l'autre en vue de l'assemblage par encliquetage avec une zone partielle de découpe (37) en enfoncement.

8. Goupille de serrage (1) selon une des revendications précédentes,
**caractérisée en ce que**
la zone de réglage (2) présente des moyens de réglage (12).

9. Goupille de serrage (1) selon la revendication 8,
**caractérisée en ce que**
le moyen de réglage (12) est un écrou à six pans (12), de préférence soudé à la goupille de serrage (1).

10. Goupille de serrage (1) selon une des revendications précédentes,
**caractérisée en ce que**
la zone de réglage (2) se raccorde directement à une des portions d'encliquetage (4,5).

11. Mâchoire de serrage pour frein à tambour comportant :
- un support de revêtement de freinage pour recevoir un revêtement de freinage sur un côté extérieur du support de revêtement de freinage et
- deux gradins (30,31) dépassant du côté intérieur du support de revêtement de freinage,
**caractérisée en ce que**
au moins un des gradins (30,31), de préférence chacun des deux gradins (30,31), présente un moyen d'encliquetage (32,33) de forme complémentaire , au moins partiellement, à une portion d'encliquetage (4) d'une goupille de serrage (1) selon une des revendications précédentes.

12. Mâchoire de serrage selon la revendication 11,
**caractérisée en ce que**
les moyens d'encliquetage (32,33) sont positionnés en vis-à-vis.

13. Mâchoire de freinage selon une des revendications 11 ou 12,
**caractérisée en ce que**
les moyens d'encliquetage (32,33) sont configurés comme des orifices (32,33), de préférence au moins un des moyens d'encliquetage (32,33) comme un orifice traversant (32,33).

14. Mâchoire de freinage selon une des revendications 11 à 13,
**caractérisée en ce que**
les orifices traversants (32,33) sont formés d'une zone partielle de découpe (34) cylindrique et d'une zone partielle de découpe (35) parallélépipédique orientée dans la direction de traction du ressort de traction (20).

15. Mâchoire de serrage selon une des revendications 11 à 13,
**caractérisée en ce que**
les orifices traversants (32,33) sont formés d'une zone partielle de découpe (34) cylindrique et d'un chanfrein (36) orienté dans la direction de traction du ressort de traction (20).

16. Mâchoire de freinage selon une des revendications 11 à 13,
**caractérisée en ce que**
les orifices traversants (32,33) sont formés d'une zone partielle de découpe cylindrique (34) et d'une zone partielle de découpe (37) à enfoncement dans la direction de traction du ressort de traction (20).

17. Frein à tambour, notamment pour remorque de véhicule, comportant deux mâchoires de freinage rotatives en sens opposé, par rapport à l'axe du corps de la remorque de véhicule, notamment par l'intermédiaire d'une came de freinage en forme de S, selon une des revendications 11 à 16, dans lequel en l'état de fonctionnement du frein à tambour, un ressort de traction (20) est bloqué entre les mâchoires de freinage et dans lequel le ressort de traction peut être transféré par l'intermédiaire d'une goupille de serrage (1) selon une des revendications 1 à 10 d'une position de tension en une position de montage et inversement.

18. Frein à tambour selon la revendication 17,
**caractérisé en ce que**
la position de tension peut être sauvegardée par des moyens d'encliquetage des mâchoires de freinage et des moyens d'encliquetage correspondants des goupilles de serrage (1).
